# EUROPEAN PATENT APPLICATION

(11) **EP 1 386 800 A2**
(43) Date of publication of application: **04.02.2004**
(21) Application number: 02724685.9
(22) Date of filing: 02.05.2002
(51) Int. Cl.: B60S 5/00, G06F 17/60

(54) **SYSTEM AND METHOD FOR RECOGNIZING DAMAGED PORTION OF VEHICLE AFTER ACCIDENT**

(30) Priority: 02.05.2001 JP 2001135605
(71) Applicant: E.A.C Co., Ltd., Sendai-shi, Miyagi 983-0852 (JP)
(72) Inventor: UEGAKI, Tateo, Sendai-shi, Miyagi 983-0011 (JP)
(74) Representative: Chettle, Adrian John
(86) International application number: PCT/JP2002/004402
(87) International publication number: WO 2002/090157

(57) **Abstract**

The present invention relates to a technique for recognizing a damaged portion of an accident vehicle which has caused an accident. It is an obj ect of the invention to provide a technique that accurately recognizes a damaged portion of the accident vehicle. The invention provides a storage apparatus for storing vehicle attribute data for each vehicle type, parts data for each vehicle type, and impact transfer data for each part of each vehicle type, an input apparatus for inputting a plurality of impact conditions including an impact input point, impact degree, and an impact input direction for the vehicle to be recognized, and a control apparatus for identifying parts which have been damaged according to the impact condition data from the input apparatus and the impact transfer data from the storage apparatus.

## Description

### Technical Field

The present invention relates to a system, a method, and a program for recognizing damaged portions of an accident vehicle or the like.

### Background Art

A system for making an estimate of repair costs for an accident vehicle includes a system in which an operator selectively specifies a damage range by using parts list data or illustration data for a vehicle.

For example, a computer device can be considered in which a damage starting point (collision location), and an ending point (damaged portion that is most distant from the collision location) , are inputted by using a mouse or the like on an illustration of an outer frame panel of an automobile displayed on a display device, and the computer device then judges portions (parts) located between the starting point and the ending point as damaged portions.

Further, a computer device can also be considered in which data on the damage starting point, an impact force, and a collision direction are inputted. The computer device then estimates parts to which damage has spread (impact is transferred) , and judges these portions as damaged portions.

Vehicles are constructed by many parts having many different materials and rigidities. In portions having low structural rigidity, the impact force is absorbed by the structural materials changing shape. In portions having high structural rigidity, the structural materials do not change shape, and the impact force is transferred to other structural materials. Vehicles in recent years have utilized these properties, and an impact absorbing material is disposed in a portion of the vehicle structure in order to protect a passenger compartment (space in a vehicle for passengers) during a collision.

However, with a conventional repair cost estimation system, an embodiment for this type of damage spread has not been considered. Recognition of damaged portions is performed by simply assuming that the impact becomes smaller as distance increases from the collision location. Therefore an accurate estimate that conforms to the actual damage incurred cannot be made, and there are cases where estimates lacking reliability are processed. Furthermore, there are times when a collision is at a plurality of portions when a vehicle causes an accident. Conventional estimating systems have not been made to accurately respond to this type of collision mode, however.

The present invention has been devised in view of the items described above. An object of the present invention is to provide a system, a method, and a program capable of correctly recognizing a damaged portion in a vehicle that has caused an accident.

Further, another object of the present invention is to provide a system, a method, and a program that perform easy estimate processing, even when used by a worker not well trained in accident vehicle repair estimates.

### Disclosure of the Invention

According to a first aspect of the present invention, an accident vehicle damaged portion recognition system includes: a storing means for storing vehicle attribute data for each vehicle type, parts data for each vehicle type, and impact transfer data for each part of each vehicle type; an impact condition inputting means for inputting multiple impact conditions, the impact conditions being set for a vehicle to be recognized based on an impact input point, an impact degree, and an impact input direction; and a damaged part judging means for judging parts which have been damaged based on the plurality of impact condition data from the impact condition inputting means, and based on the impact transfer data of the storing means.

The damaged part judging means may make judgment results after excluding redundant parts for cases where redundant parts have been judged when judging the parts which have been damaged for each of the impact condition.

Further, the accident vehicle damaged portion recognition system according to the present invention further includes displaying means for displaying an image data of a vehicle, and the systemmay be structured such that the impact condition inputting means inputs an impact condition for a vehicle on a vehicle image that is displayed in the displaying means; and the damaged part judging means displays the parts which have been judged to have been damaged in the displaying means.

The damaged portion judging means may further include: a repair cost calculating means for calculating a repair cost for the damaged parts according to the parts data of the storing means; the damaged part judging means further judging a damage level for the damaged parts.

Further, the damaged portion judgingmeans may further include a repair method presenting means for presenting a repair method for the damaged parts according to the parts data of the storing means; the damaged part judging means further judging a damage level for the damaged parts.

Further, the accident vehicle damaged portion recognition system according to the present invention further includes: a displaying means for displaying vehicle image data corresponding to a damage condition of the vehicle; and an estimate data creating means for calculating vehicle repair costs based on the damaged parts judged by the damaged part judging means, and creates repair cost estimate data that includes the vehicle image data displayed in the displaying means.

Further, the displaying means may have an exposure mode for extracting the vehicle image data displayed in the displaying means from a predetermined direction as image data.

Further, according to a second aspect of the present invention, there is provided a method of recognizing a damaged portion of an accident vehicle, using a computer that includes: a storing means for storing vehicle attribute data for each vehicle type, parts data for each vehicle type, and impact transfer data for each part of each vehicle type; and an impact condition inputting means for inputting an impact input condition for a vehicle to be recognized, in which the computer implements the steps of: inputting a plurality of input data as the impact input condition based on an impact input point, an impact degree, and an impact input direction by using the impact condition inputting means; and judging parts which have been damaged based on the plurality of input data and on the impact transfer data of the storing means.

The method of recognizing a damaged portion of an accident vehicle according to the second aspect of the present invention may be a method in which the computer implements an additional step of excluding redundant parts for cases where redundant parts are extracted in the step of judging the parts which have been damaged.

Furthermore, according to a third aspect of the present invention, there is provided a program for making a computer that includes: a storing means for storing vehicle attribute data for each vehicle type, parts data for each vehicle type, and impact transfer data for each part of each vehicle type; and an impact condition inputting means for inputting an impact input condition for a vehicle to be recognized, implement the steps of: inputting a plurality of input data as the impact input condition based on an impact input point, an impact degree, and an impact input direction by using the impact condition inputting means; and judging parts which have been damaged based on the plurality of input data and on the impact transfer data of the storing means.

The program according to the third aspect of the present invention may be a program in which the computer implements an additional step of excluding redundant parts for cases where the redundant parts are extracted in the step of judging the parts which have been damaged.

According to the present invention, a technique capable of accurately recognizing a damaged portion in a vehicle that has caused an accident can be provided.

Further, a technique in which an estimate can be processed easily, even when used by a worker not well trained in accident vehicle repair estimates, can be provided.

Note that the term "portion" used in this specification embraces in terminology a group of parts having coherence to some extent, which are related to one piece of part of the vehicle. The "coherence to some extent" implies a group of parts neighboring to one part, or a group of parts related when repairing one part (for example, a group of parts required to be attached and detached when repairing one part). Note that one part may also be conceived as one portion.

### Brief Description of the Drawings

Fig. 1 is a block diagram showing a system for recognizing damaged portions of an accident vehicle in one embodiment of the present invention;
Fig. 2 is a diagram showing a layout of a screen displayed during estimate processing on a display device in the embodiment;
Fig. 3 is a diagram showing a layout of the screen displayed during estimate processing on the display device in the embodiment;
Fig. 4 is a diagram showing a layout of the screen displayed during estimate processing on the display device in the embodiment;
Fig.5 is a diagram showing a layout of the screen displayed during estimate processing on the display device in the embodiment;
Fig. 6 is a diagram showing a layout of the screen displayed during estimate processing on the display device in the embodiment;
Fig. 7 is a diagram showing a layout of the screen displayed during estimate processing on the display device in the embodiment;
Fig. 8 is a diagram showing a layout of the screen displayed during estimate processing on the display device in the embodiment;
Fig. 9 is a diagram showing a layout of the screen displayed during estimate processing on the display device in the embodiment;
Fig. 10 is a diagram showing a layout of the screen displayed during estimate processing on the display device in the embodiment;
Fig. 11 is a diagram showing a layout of the screen displayed during estimate processing on the display device in the embodiment;
Fig. 12 is a diagram showing a layout of the screen displayed during exposure mode on the display device in the embodiment;
Fig. 13 is a diagram showing a layout of the screen displayed during exposure mode on the display device in the embodiment;
Fig. 14 is a diagram showing a layout of the screen displaying estimate content on the display device in the embodiment;
Fig. 15 is a diagram showing a layout of the screen displaying estimate content on the display device in the embodiment;
Fig. 16 is an explanatory flowchart showing a control process by a computer in the embodiment; and
Fig. 17 is an explanatory flowchart showing a control process by a computer in the embodiment.

### Best Mode for Carrying out the Invention

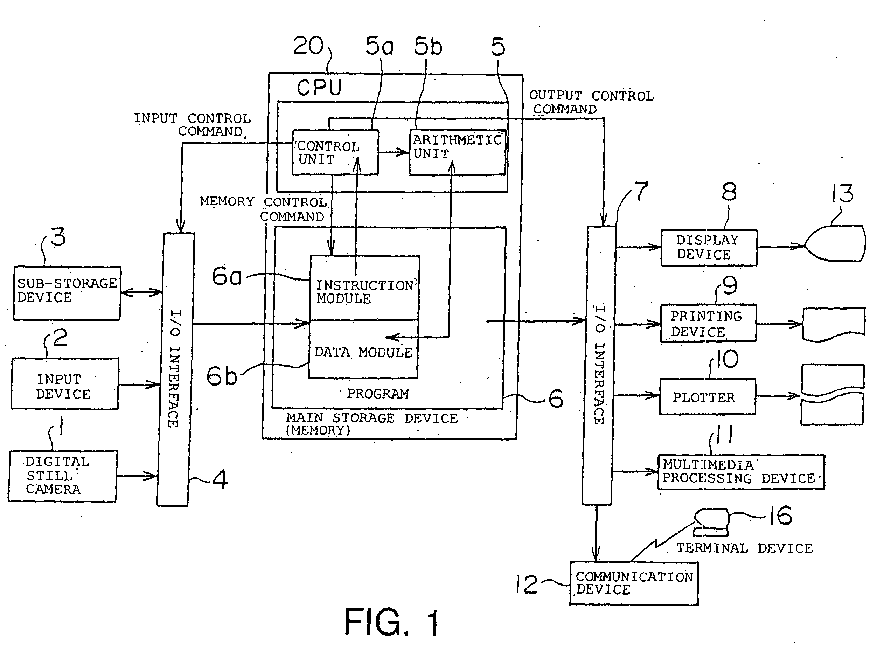

Hereinafter, an explanation will be made on an embodiment of a system, a method, and a program for recognizing damaged portions of an accident vehicle according to the present invention with reference to Figs. 1 to 17.

The system for recognizing damaged portions of an accident vehicle of this embodiment realizes the system, method and program for recognizing damaged portions of an accident vehicle according to the present invention. The system in this embodiment includes, as shown in Fig. 1, a personal computer (that will hereinafter be abbreviated to PC) 20, a sub-storage device 3 connected via an I/O interface 4 to the PC 20, an input device 2 such as a keyboard, a mouse, a trackball a touch pad and so on, a digital still camera 1, and output devices such as a display device 8 connected via an I/O interface 7 to the PC 20, a printing device 9 and a communication device 12.

Herein, the sub-storage device 3 connected via the I/O interface 4 to the PC 20 may involve the use of a floppy disk device, a hard disk device or an optical disk device. Note that the sub-storage device 3 corresponds to a second storing means.

Then, an OCR (optical character reader) , an OMR (optical mark reader), a bar code reader, a digitizer, an image scanner and a voice recognizing device in addition to the keyboard etc may also be connected as the input device 2. Note that a plotter 10 and a multimedia processing device 11 other than the display device 8 etc may also be connected as the output devices. Moreover, the communication device 12 may be connected via communication lines to other terminal devices 16. Note that the input device 2 corresponds to an impact condition inputting means, and the display device 8 and a display 13 connected to the display device 8 correspond to a displaying means.

Further, the system in this embodiment includes a device for taking in image data of a repair target vehicle. The device for taking in the image data of the repair target vehicle may involve the use of, in addition to the digital still camera 1, an optical sensor having a light projection unit, a light receiving optical unit and a photoelectrically converting unit. Herein, the light projection unit of the optical sensor uses a tungsten lamp, a halogen lamp, a fluorescent lamp and so on for continuous light, and a xenon lamp for intermittent light. Then, the light receiving optical system involves the use of an ITV camera using vidicon, silicon vidicon, Chalnicon etc., a semiconductor sensor, or a MOS- and CCD-type fixed camera. The photoelectrically converting unit is constructed of an imaging tube, a solid-state image pickup tube device, a photoelectric converting device and so on.

Note that the device for taking in the image data of the repair vehicle may involve the use of, in addition to the digital still camera 1, a dynamic image pickup camera, wherein a stream of dynamic image is obtained by photographing the repair target vehicle placed on a turntable in a way that makes one rotation of this vehicle in a fixed direction, and static images viewed in predetermined directions may be extracted for use from the stream of dynamic image.

The PC 20 is constructed of a main storage device 6 (a hard disk, a ROM and a RAM [which are generically called a memory]) and a central processing unit 5 (that will hereinafter be abbreviated to CPU). Then, the PC 20 making a judgement about a damaged part of the accident vehicle and estimating a cost for repairing it, boots a program cached in the memory 6 or the sub-storage device 3 under OS control and executes a predetermined task (process). This PC 20 is also capable of executing multitasks in a way that virtually simultaneously executes a plurality of tasks in parallel.

Note that a function of a memory management device is included in the functions of the PC 20. Namely, this memory management device has also a function of translating a logical address on the memory 6 that is specified by the process in order to read or write into a physical address indicating a physical page address for actually reading from and writing to the memory 6.

Next, the CPU 5 as a main component of the PC 20 includes an arithmetic device 5b for performing arithmetic operations, logical operations, and the like with respect to the data given, and a control unit 5a for reading an instruction into the CPU 5 from the memory 6 on the basis of an address of an instruction module 6a to be executed, then decoding a content of the instruction and giving necessary operating indications to other devices.

This control unit 5a, as shown in Fig. 1, issues an input control command to the input device 2 etc, a memory control command to the memory 6 and an output control command to the output device etc. Then, the command inputted from the input device 2 etc is transferred at first to the memory 6. The memory 6 selects data and an instruction out of the command given, and transfers the selected data and instruction to the control unit 5a of the CPU 5.

Herein, the image data taken in by the digital still camera 1 and transferred to the memory 6 via the I/O interface 4, or the repair vehicle data inputted from the input device 2 such as the keyboard are temporarily stored in a data module 6b of the memory 6. Note that the PC 20 corresponds to a damaged part judging means.

By the way, this data module 6b is stored with profile data of vehicle profiles viewed (imaged) in every direction with respect to each vehicle (each car model). The data module 6b is stored with the profile data of the vehicle profiles viewed in every direction by dividing overall 360-degree directions by, e.g., 12. Note that these pieces of profile data may be obtained by projecting the vehicle in every direction with the aid of CAD (computer aided design) data and wire frame data prepared for every car model. Further, what can be exemplified as the vehicle profile data may be profile data of an outer configuration of the vehicle and of a vehicle internal structure. Moreover, the profile data may include image data for displaying the vehicle outer configuration and internal structure in details.

Further, the data module 6b is also stored with an areal size of each of the outer plate panels of every vehicle.

Then, the data module 6b is stored with items of vehicle data, parts data repair manual data, coating color data and coating method data corresponding to every car mode and a grade thereof.

Moreover, the data module 6b is stored with data sets showing prices of the vehicle parts and work wages for replacing the parts or repairing, and with mapping data as vehicle attribute data of the damaged parts of the vehicle that should be repaired to parts with which to replace the damaged parts or used for repairing these damaged parts. Further, the data module 6b is stored with the work wages data of the wages required for sheet metal repair corresponding to every work.

Furthermore, those items of data stored in the data module 6b can be ranked. For example, the storing can be conducted even with regard to the parts to be replaced while the highest rank is given to a new genuine part, a good-condition part or the like is given a middle rank, and a used genuine part is given the lowest rank.

The users are thereby given options for estimation, and the information is disclosed to the users, so that the users can select the option. Thus, it becomes possible to increase a frequency of using the used parts network and so on and to propose giving a boost to recycling.

Note that these items of data stored in the data module 6b contain vehicle image data, as vehicle attribute data, for searching for the damaged part of the repair target vehicle on the basis of the past repaired vehicle data, the past repaired vehicle damage data acquired from the past repaired vehicle data, the parts data used for the past repaired vehicles, and the past repaired vehicle damaged parts data.

The control unit 5a decodes the repair target vehicle data and image data of the accident vehicle and the instruction, which have been transferred from the memory 6, and gives a necessary operating indication to the arithmetic device 5b. Then, the arithmetic device 5b performs the logical operations with respect to the given repair target vehicle data, image data, and instruction.

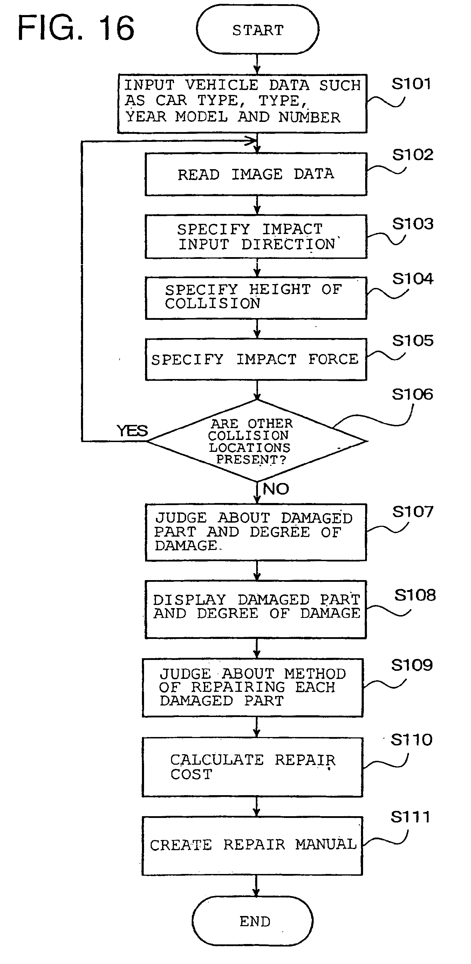

Next, the processing by the PC 20 in this embodiment will be explained referring mainly to a flowchart of Fig. 16.

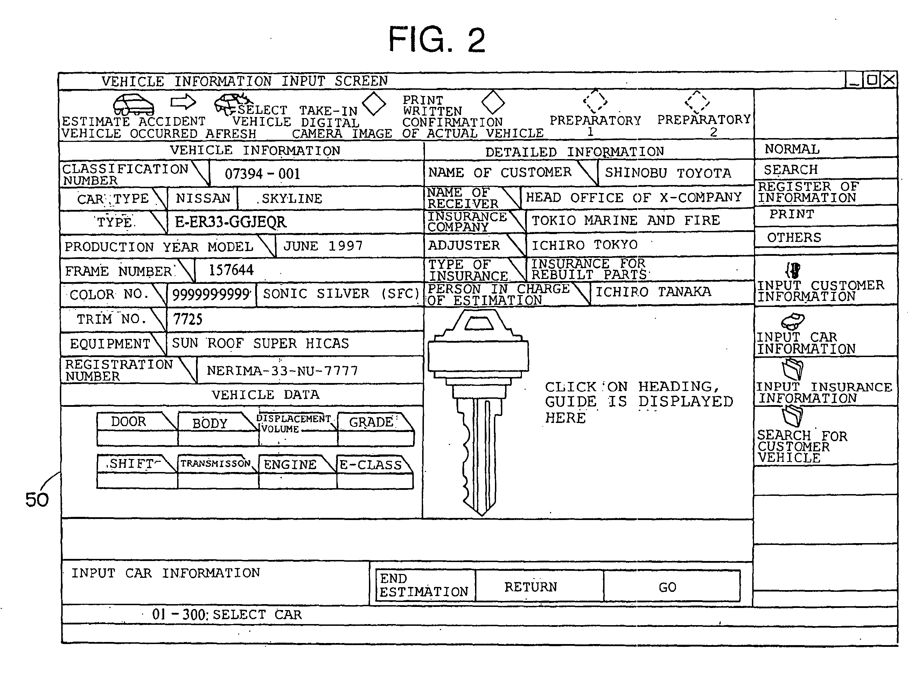

To start with, the operator inputs pieces of vehicle data such as a car model, a type specification number, a year model, a classification number, and a number of the accident vehicle on a screen 50 displayed on the display 13 by use of the input device 2 (step 101, Fig. 2). Note that the type specification number is a number regarding the car model which is allocated by the Ministry of Land, Infrastructure and Transport, and the classification number is a number which is uniquely set by an automobile manufacturer based on equipment (grades) of each vehicle.

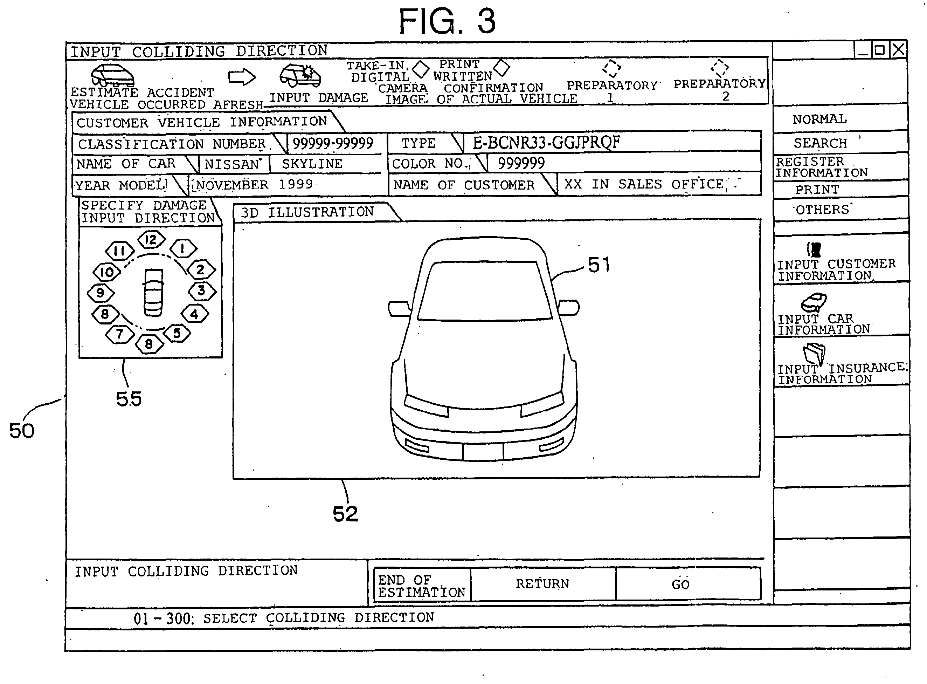

Then, the control unit 5a reads image data 51 of the car type corresponding to the inputted vehicle data from the sub-storage device 3, and the screen 50 containing a vehicle image data display area 52 displaying an image of the vehicle image data 51 is displayed on the display 13 (step 102, Fig. 3). Note that the screen 50 also displays a damage input direction specifying area 55, in which the vehicle can be viewed in the 12 directions into which the overall periphery of the vehicle is divided by 12 on a plane, for specifying a damage (impact) input direction.

Next, the control unit 5a judges which direction is specified through the input device in the damage input direction specifying area 55 (step 103). Here, it is assumed that an 11 o'clock direction be specified.

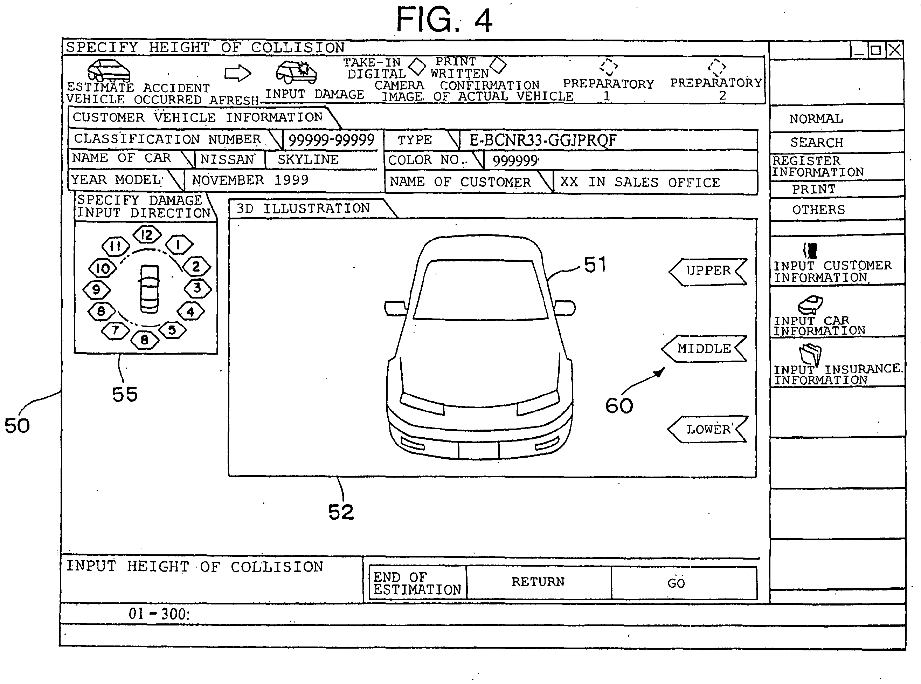

Thereafter, the control unit 5a displays height specifying bars 60 within the vehicle image data display area 52, and judges which damage position height is specified (step 104, Fig. 4). Note that a middle height is assumed to be specified.

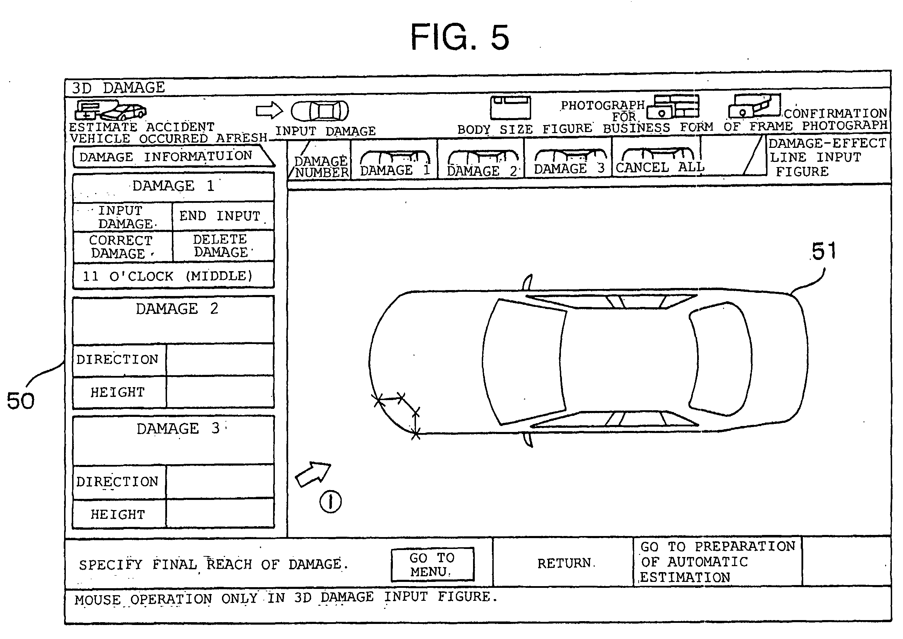

Next, the control unit 5a displays a plane image of the vehicle on the screen 50 and judges what degree of impact force is specified through the input device 2 (step 105). The control unit 5a, when judging how strong the impact force is, can judge a degree of the damage from a length of vector inputted on the screen 50 as shown in Fig. 5. Further, as shown in Fig. 5, some points on the plane image of the vehicle are clicked with a mouse to be marked, and lines connecting those points areidentified withsuperficialdamage ripple lines of an accident vehicle, thereby the degree of the damage is specified.

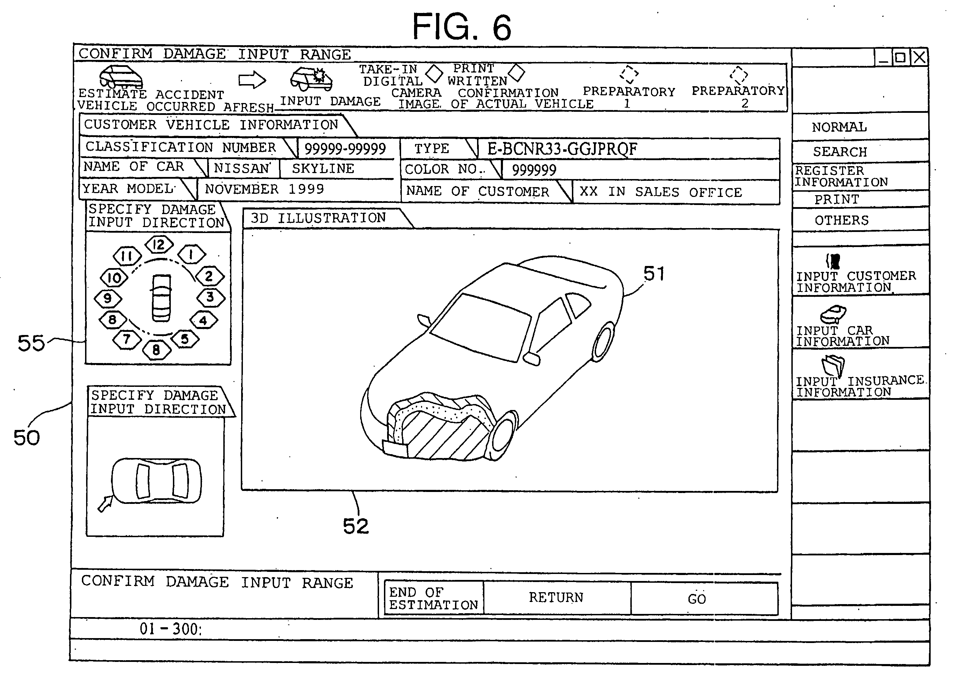

Note that the operator, as shown in Fig. 6, specifies the vector to a certain length andmay simultaneously display a caused-by-damage deformation, corresponding to that impact force, of the outer configuration of the vehicle as a vehicle image. Therefore, the external damaged shape of the collidedportion of the accident vehicle can be well recognized from outside, and hence the operator is able to easily specify a precise impact force by determining the length of vector at the time of coming to the same deformation as the actual deformation of the outer configuration of the accident vehicle while adjusting the length of vector.

Further, the impact force may be specified by processing the image data of the accident vehicle that have been taken in from the digital still camera 1. That is, a profile of the vehicle is traced from the image data of the accident vehicle, a shape of this profile is comparedwith a shape of normal profile stored beforehand, a degree of deformation is recognized from a difference between their coordinate values, and the impact force is set to a value corresponding to this deformation.

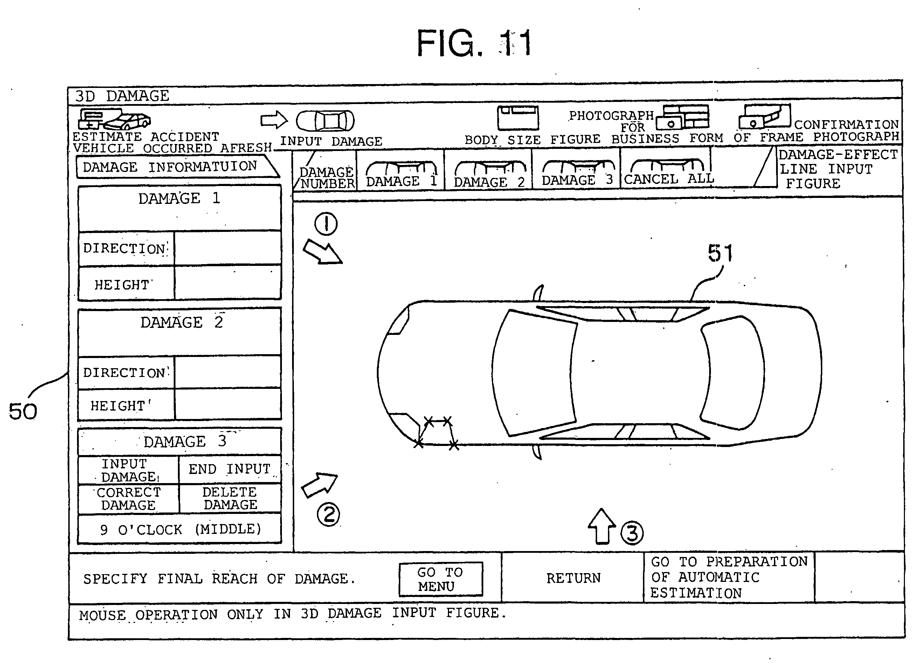

Next, the control unit 5a determines whether or not there is another damaged portion (impact input portion) (a step 106). The control unit 5a repeatedly performs processing from the step 103 when another damaged portion is indicated by an operator instruction. As shown in Fig. 11, at this point a plurality of damage information is displayed on the screen 50. Input of a third damage condition is being performed here, and vector 1 to vector 3 express each of the damage input directions. That is, the vector 1 expresses a damage direction in a 1 o'clock direction, the vector 2 expresses a damage direction in an 11 o'clock direction, and the vector 3 expresses a damage direction in a 9 o'clock direction.

In the case where there is no other damaged portion in step 106, the control unit 5a judges where the damaged part is and a degree of the damage of this damaged part (step 107).

The sub-storage device 3 is stored with impact transfer data of each part for every car type on the basis of a rigidity, a material, and a structure of the part, and the control unit 5a is therefore capable of recognizing a state of the damage in accordance with the car type from the impact transfer data. That is, the impact transfer data stored in the sub-storage device 3 is set as an index value with respect to the standard part.

For instance, a part having a rigidity higher than the standard part is easier to transfer the impact and is therefore given an index such as "1.2" or the like. Further, when an impact transfer speed of the standard part is "50%", it is calculated from an expression "1.2 x 0.5 = 0.6" that 60% of an impact is transferred to another part. Note that it can also be said that the part absorbs 40% of the impact.

Further, a part adopting a mesh structure or the like and having a rigidity lower than the standard part is easier to absorb the impact and is therefore given an index such as "0.8" or the like. Further, when an impact transfer speed of the standard part is "45%", it is calculated from an expression "0.8 x 0.45 = 0.36" that 36% of an impact is transferred to another part. Note that it can also be said that the part absorbs 64% of the impact.

Note that the impact transfer data of the standard part itself and the index set to each part for every car type, are determined by analyzing collision test data of a test performed previously for every car type, however, the data can be updated based on fresh pieces of collision test data and accident accumulation data.

Further, the impact transfer rate (or the impact absorption rate) is set directly for each of the parts of each vehicle type when setting the impact transfer data, without using a standard part impact transfer rate as a reference.

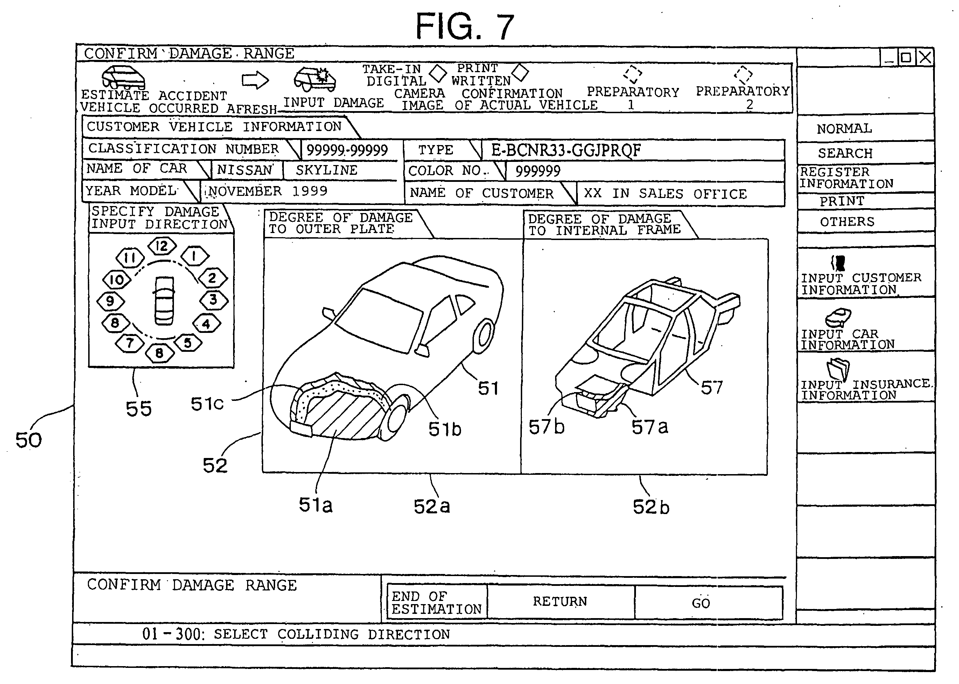

Then, the control unit 5a makes a judgement about the damaged part and the degree of damage in accordance with the car type on the basis of the impact input state data such as the impact input direction, and the position of collision including the height of collision, and the impact force and of the indexes set to the respective parts. Fig. 7 shows the screen 50 on which 52a including the vehicle image data 51 indicating a degree of damage to the outer plate of the vehicle, and an internal frame degree-of-damage display area 52b including vehicle image data 57 indicating a degree of damage to the internal frame of the vehicle are displayed. The outer plate degree-of-damage display area 52a displays a damaged part 51a (red) exhibiting a large degree of damage, a damaged part 51b (yellow) exhibiting an intermediate degree of damage and a damaged part 51c (blue) exhibiting a small degree of damage in different colors. Further, the internal frame degree-of-damage display area 52b displays a damaged part 57a (red) exhibiting a large degree of damage and a damaged part 57b (yellow) exhibiting a small degree of damage in different colors (step 108).

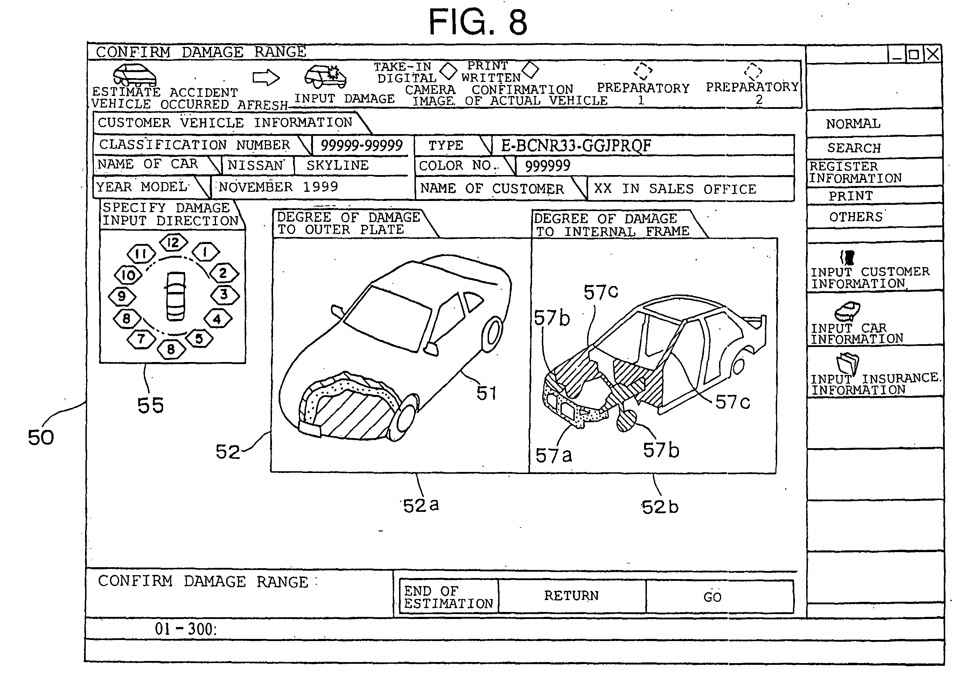

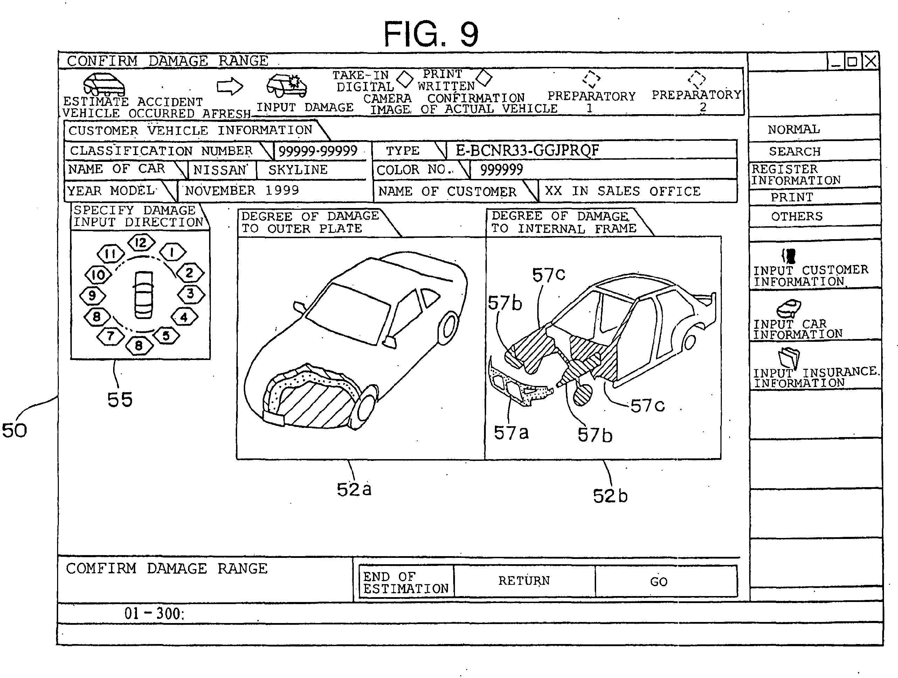

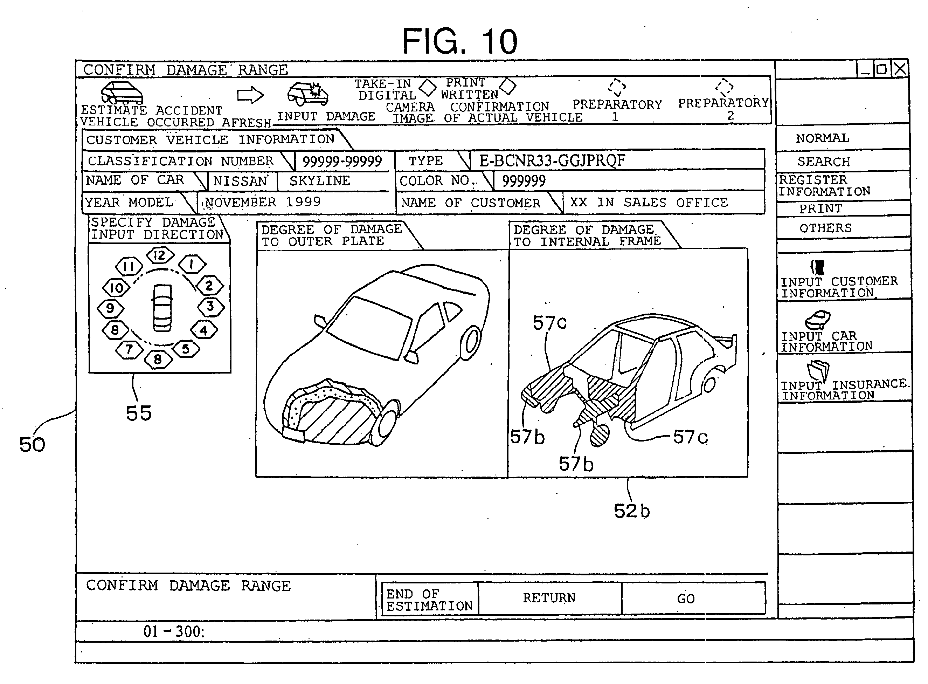

Figs. 8 to 10 each show the screen on which the damaged part and the degree of damage to the vehicle are displayed in more details in the internal frame degree-of-damage display area 52b in a way that focuses on the vehicle image data of the internal frame. Then, referring to Fig. 8, the internal frame degree-of-damage display area 52b displays a damaged part 57a (red) exhibiting a large degree of damage, a damaged part 57b (yellow) exhibiting an intermediate degree of damage and a damaged part 57c (blue) exhibiting a small degree of damage in colors. Note that it can be recognized from the images in Fig. 8 that the impact caused by the collision is transferred up to a left center pillar. Further, Figs. 9 and 10 each show a state where the control unit 5a judges about a method of repairing the damaged part, in which the control unit 5a displays a damaged part 57a (a front bumper) exhibiting a large degree of damage away from other parts, which implies that the damaged part 57a should be replaced with a new part (step 109).

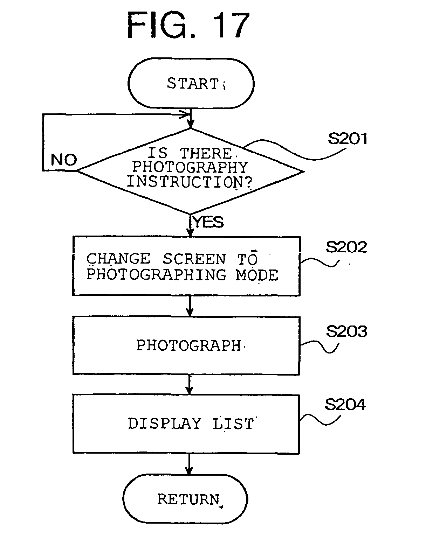

A photograph exposure (pseudo exposure) mode set during estimate processing in order to expose a photograph appended to the estimate data will be explained referring mainly to a flowchart of Fig. 17.

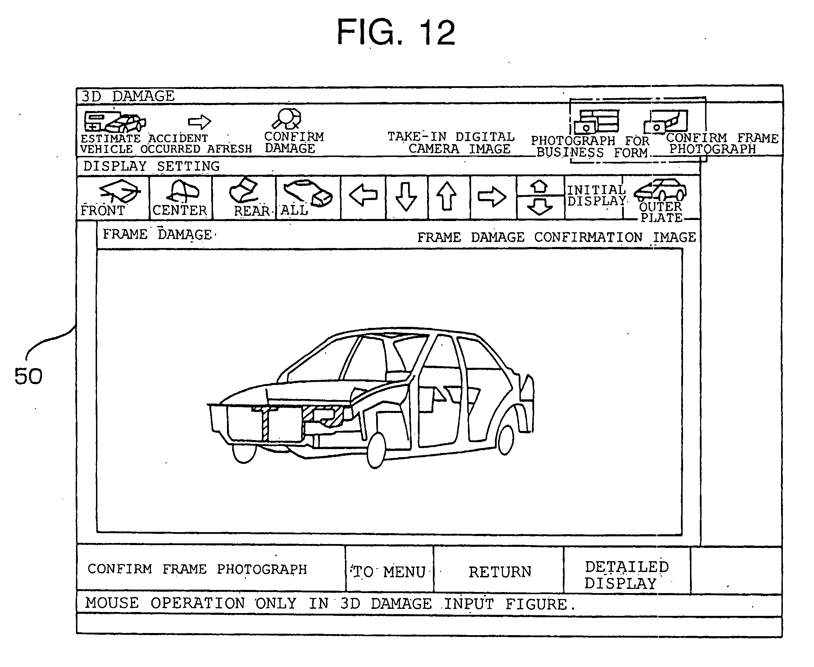

When there is a photograph exposure instruction by the operator during estimate processing as shown in Fig. 8 to Fig. 10 (a step 201), the control unit 5a changes the screen 50 into an exposure mode screen like that shown in Fig. 12 (a step 202).

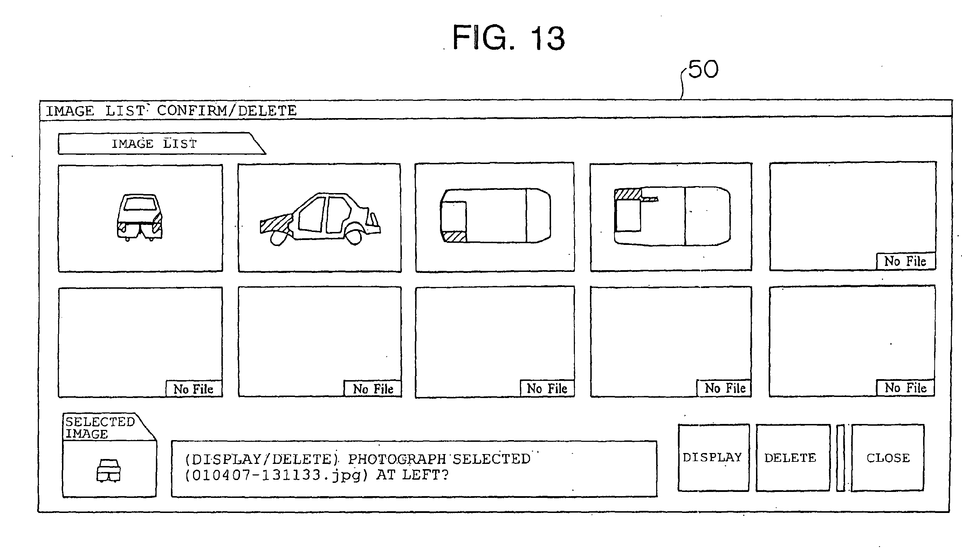

By suitably clicking each type of icon on the exposure mode screen 50 by using a mouse, the operator arbitrarily changes the direction of the vehicle image on the screen 50, performs enlargement and reduction, and takes a photograph as a vehicle image that accurately expresses the condition of a damaged portion (a step 203). When taking the photograph, the vehicle image displayed at that point is stored within the memory 6 as a BMP format image by clicking on a shutter icon on the screen 50. Next, the control unit 5a displays the exposure data stored within the memory 6 on the screen 50 as a list (a step 204, Fig. 13) , and returns to the processing of the step 201.

The discussion returns to the explanation of the flowchart shown in Fig. 16.

After the processing of the step 109, the control unit 5a calculates a cost for repairing the vehicle by integrating prices of the parts and a work wage with reference to the parts data and so on in the sub-storage device 3 depending on the replacement or the repair according to the damagedportion (parts) repairingmethod, and displays detailed estimation data on the screen 50. (a step 110). When redundant parts have been extracted due to the existence of a plurality of damaged portions, the excess redundant parts are removed, and then the estimate is calculated and displayed.

It should be noted that the control unit 5a verifies whether or not a rebuilt part, corresponding to a replacement part, is in stock for cases where a user accepts the use of rebuilt parts in performing vehicle repair. Detailed data on the repair cost estimate, including that for the rebuilt parts, is then displayed in the screen 50. Further, a list of parts and labor associated with the damaged parts can be displayed on the screen when making the repair cost estimate. The operator can select suitable items from the list, and make corrections to the estimate.

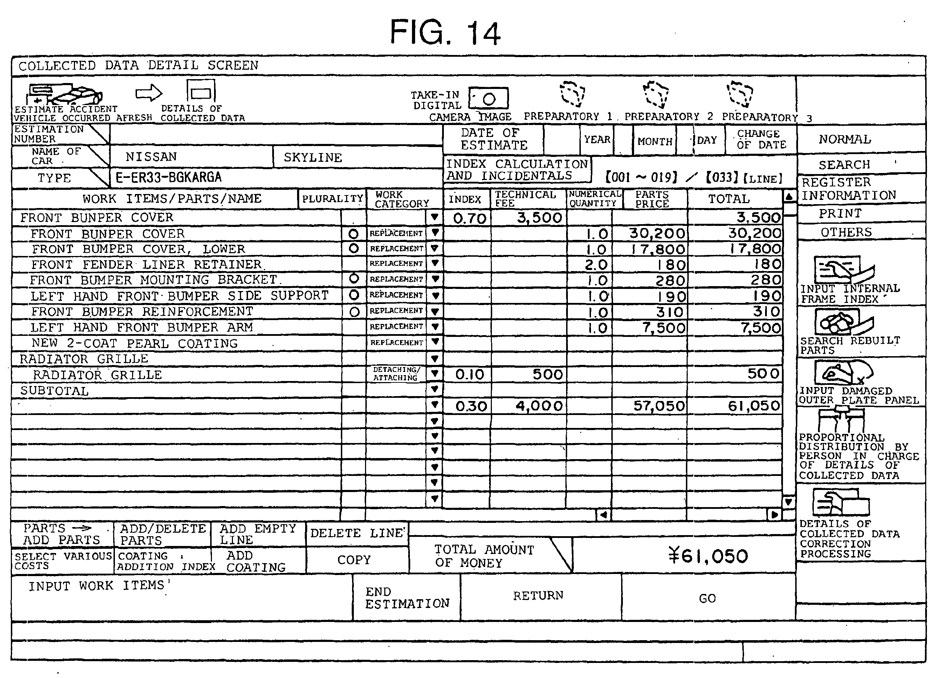

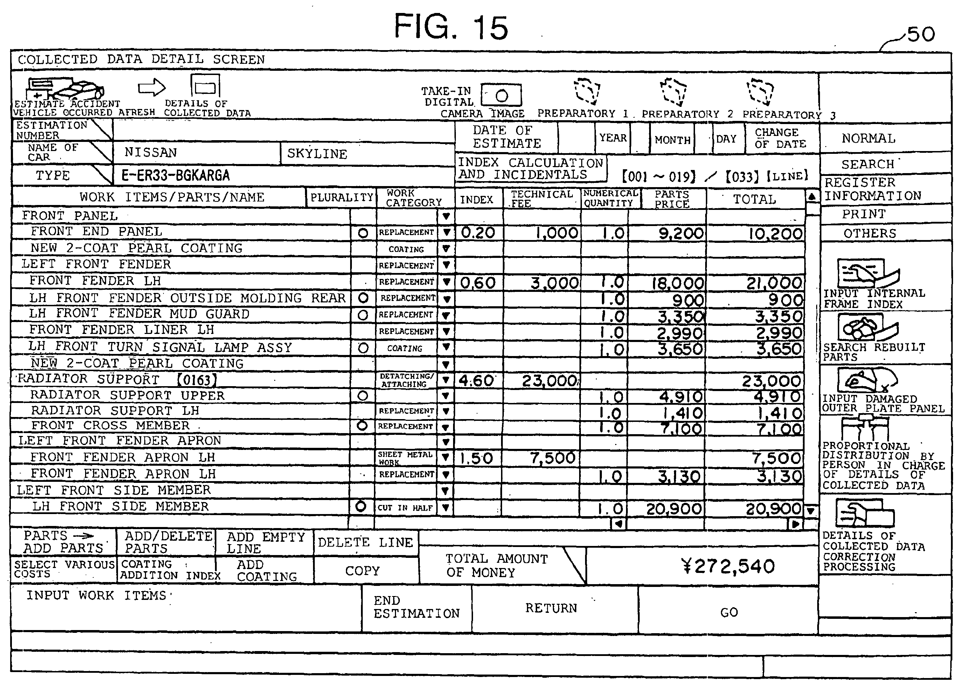

The control unit 5a then computes repair procedures for the estimation target vehicle, and creates a repair manual. After the repair cost estimate and the repair manual are printed, processing is complete (a step 111). The above-mentioned exposure data for the vehicle image is also printed when creating the repair cost estimate, and appended to the estimate. Further, the exposure data may also be incorporated within the estimate document and printed. It should be noted that Fig. 14 is an example that expresses estimate content for a case where there is one damaged portion, and Fig. 15 is an example that expresses estimate content for a case where there are a plurality of (three) damaged portions.

According to the accident vehicle damaged portion recognition system, recognition method, and recognition program of this embodiment as described above, the impact transfer data (damage spread data) is set for each of the structural parts of each vehicle type, and therefore accurate recognition of the damaged portion can easily be performed for each vehicle type by simply specifying impact condition data such as the input direction of the collision with respect to the vehicle, the input height, and the impact force. A plurality of collision locations can be set at the same time, and therefore the damage condition can be accurately understood according to the corresponding damage to the accident vehicle.

The present invention is not limited to the contents in the embodiment discussed above and can be modified in many forms by those skilled in the art without departing from the scope of the gist according to the claims.

## Claims

1. An accident vehicle damaged portion recognition system comprising:
a storing means for storing vehicle attribute data for each vehicle type, parts data for each vehicle type, and impact transfer data for each part of each vehicle type;
an impact condition inputting means for inputting multiple impact conditions, the impact conditions being set for a vehicle to be recognized based on an impact input point, an impact degree, and an impact input direction; and
a damaged part judging means for judging parts which have been damaged based on the plurality of impact condition data from the impact condition inputting means, and based on the impact transfer data of the storing means.

2. An accident vehicle damaged portion recognition system according to claim 1, wherein the damaged part judging means makes judgment results after excluding redundant parts for cases where redundant parts have been judged when judging the parts which have been damaged for each of the impact conditions.

3. An accident vehicle damaged portion recognition system according to claim 1 or claim 2, further comprising a displaying means for displaying an image data of a vehicle, wherein:
the impact condition inputtingmeans inputs an impact condition for a vehicle on a vehicle image that is displayed in the displaying means; and
the damaged part judging means displays the parts which have been judged to have been damaged in the displaying means.

4. An accident vehicle damaged portion recognition system according to claim 1, further comprising:
a repair cost calculating means for calculating a repair cost for the damaged parts according to the parts data of the storing means;
wherein the damaged part judging means further judges a damage level for the damaged parts.

5. An accident vehicle damaged portion recognition system according to claim 1, further comprising:
a repair method presenting means for presenting a repair method for the damaged parts according to the parts data of the storing means;
wherein the damaged part judging means further judges a damage level for the damaged parts.

6. An accident vehicle damaged portion recognition system according to claim 1, further comprising:
a displaying means for displaying vehicle image data corresponding to a damage condition of the vehicle; and
an estimate data creating means for calculating vehicle repair costs based on the damaged parts judged by the damaged part judging means, and creates repair cost estimate data that includes the vehicle image data displayed in the displaying means.

7. An accident vehicle damaged portion recognition system according to claim 6, wherein the displaying means has an exposure mode for extracting the vehicle image data displayed in the displaying means from a predetermined direction as image data.

8. A method of recognizing a damaged portion of an accident vehicle, using a computer comprising:
a storing means for storing vehicle attribute data for each vehicle type, parts data for each vehicle type, and impact transfer data for each part of each vehicle type; and
an impact condition inputting means for inputting an impact input condition for a vehicle to be recognized,
wherein the computer implements the steps of:
inputting a plurality of input data as the impact input condition based on an impact input point, an impact degree, and an impact input direction by using the impact condition inputting means; and
judging parts which have been damaged based on the plurality of input data and on the impact transfer data of the storing means.

9. A method of recognizing a damaged portion of an accident vehicle according to claim 8, wherein the computer implements an additional step of excluding redundant parts for cases where redundant parts are extracted in the step of judging the parts which have been damaged.

10. A program for making a computer that comprises:
a storing means for storing vehicle attribute data for each vehicle type, parts data for each vehicle type, and impact transfer data for each part of each vehicle type; and
an impact condition inputting means for inputting an impact input condition for a vehicle to be recognized, implement the steps of:
inputting a plurality of input data as the impact input condition based on an impact input point, an impact degree, and an impact input direction by using the impact condition inputting means; and
judging parts which have been damaged based on the plurality of input data and on the impact transfer data of the storing means.

11. A program according to claim 10, wherein the computer implements an additional step of excluding redundant parts for cases where the redundant parts are extracted in the step of judging the parts which have been damaged.
